# EUROPEAN PATENT SPECIFICATION

(11) **EP 3 555 538 B1**
(45) Date of publication and mention of the grant of the patent: **25.05.2022**
(21) Application number: 16923700.5
(22) Date of filing: 13.12.2016
(51) Int. Cl.: F25D 23/02, F25D 23/06, F16L 59/065, H02G 3/04

(54) **PASS-THROUGH SOLUTIONS FOR VACUUM INSULATED STRUCTURES**
DURCHGANGSLÖSUNGEN FÜR VAKUUMISOLIERTE STRUKTUREN
SOLUTIONS DE PASSAGE POUR STRUCTURES ISOLÉES SOUS VIDE

(43) Date of publication of application: 23.10.2019
(73) Proprietor: Whirlpool Corporation, Benton Harbor, MI 49022 (US)
(72) Inventor: DHERDE, Eric J., Benton Harbor, Michigan 49022 (US); FIORI, Michael A., Benton Harbor, Michigan 49022 (US); FRATTINI, Gustavo, Benton Harbor, Michigan 49022 (US); MARINELLO, Giulia, Benton Harbor, Michigan 49022 (US); HUNTER, Lynne F., Benton Harbor, Michigan 49022 (US); EKSHINGE, Sunil S., Pune Maharashtra 411034 (IN); PATHAK, Sanjesh Kumar, Benton Harbor, Michigan 49022 (US)
(74) Representative: Spina, Alessandro
(86) International application number: PCT/US2016/066322
(87) International publication number: WO 2018/111235

(56) References cited:
- EP-A1- 2 910 878
- EP-A2- 2 589 905
- JP-A- 2000 039 254
- RU-C2- 2 264 588
- US-B1- 6 224 179

## Description

### FIELD OF THE DISCLOSURE

The present device generally relates to insulated structures, and in particular, to a vacuum insulated refrigerator cabinet structure that includes a variety of pass through solutions to route utility lines through the structure.

### BACKGROUND OF THE DISCLOSURE

Various types of insulated cabinets and doors have been developed for refrigerators and the like. Refrigerator doors and/or cabinets may comprise vacuum insulated structures having an outer wrapper that is sea led to an inner liner to form a vacuum cavity that is filled with various different porous materials. In most refrigerators, utility lines such as power, refrigerant, and/or water lines may need to be run through the insulated structure to provide for various refrigerator components such as ice and water dispensers. However, routing such utility lines through insulated structures may be problematic.

Prior art document EP2589905A2 discloses a refrigerator including an inner case that defines an exterior appearance of a storage space, an outer case spaced apart a predetermined distance from the inner case and a vacuum space provided between the inner case and the outer case. A liquid-gas interchanger arranged in the vacuum space to generate heat exchange between refrigerant after exhausted from an evaporator and refrigerant before drawn into an evaporator. In a preferred embodiment, the liquid-gas interchanger is formed in an S-shape to form a plurality of curvature points. An end of the liquid-gas interchanger is welded to a communication hole formed in the outer case and the other end of the liquid-gas interchanger is welded to a communication hole formed in the inner case.

Prior art document US6,224,179B1 discloses a heat-insulating housing for a household refrigerating appliance, including a working space which is surrounded by housing walls and is closed by a door. The housing walls are formed from two substantially dimensionally rigid housing shells which are at a spacing from each other and together substantially enclose an intermediate space that is evacuated and is filled with heat insulation material. Empty straight tubes made of plastic are fixed to the heat-insulating housing through vacuum-proof fastening elements and serve to receive control and supply lines.

### SUMMARY

According to the present disclosure, a vacuum insulated refrigerator structure is provided. The vacuum insulated refrigerator structure includes a shell having a liner and a wrapper wherein the shell defines an internal vacuum cavity, a refrigerator compartment, and a freezer compartment. The vacuum insulated refrigerator structure also includes a serpentine elongated pass-through and a straight elongated pass- through both defining an elongated internal space and having a central portion disposed in the internal vacuum cavity, and opposite end portions that are sealingly connected to the shell, each opposite end portion having an opening that permits access to the elongated internal space from the outside of the shell. The vacuum insulated refrigerator structure further includes a vacuum core material fill positioned in the internal cavity and one or more utility lines disposed in the elongated internal space and having opposite ends extending out of the openings at the opposite ends of the elongated pass-through. The freezer compartment has the serpentine elongated pass-through and the refrigeration compartment has the straight elongated pass-through.

These and other features, advantages, and objects of the present device will be further understood and appreciated by those skilled in the art upon studying the following specification, claims, and appended drawings.

### BRIEF DESCRIPTION OF THE DRAWINGS

In the drawings:
FIG. 1 is a front isometric view of a vacuum insulated refrigerator structure accord to one aspect of the present disclosure;
FIG. 2 is an exploded isometric view of the vacuum insulated refrigeration structure according to one aspect of the present disclosure;
FIG. 3 is a cross-sectional view of a portion of the vacuum insulated refrigeration structure having a straight elongated pass-through according to one aspect of the present disclosure;
FIG. 4 is a cross-sectional view of a portion of the vacuum insulated refrigeration structure having a straight elongated pass-through with a connection collar according to one aspect of the present disclosure;
FIG. 5A is an isometric view of a straight pass-through according to one aspect of the present disclosure;
FIG. 5B is a cross-sectional view of a portion of the vacuum insulated refrigeration structure having a straight elongated pass-through according to one aspect of the present disclosure;
FIG. 6 is a cross-sectional view of a portion of the vacuum insulated refrigeration structure having a straight elongated pass-through according to one aspect of the present disclosure;
FIG. 7A is a cross-sectional view of a portion of the vacuum insulated refrigeration structure having a bent elongated pass through with a connection collar according to a non-claimed example;
FIG. 7B is a partially fragmentary isometric view of the bent elongated pass-through of the vacuum insulated refrigeration structure of FIG. 7A;
FIG. 7C is a partially fragmentary isometric view of the outer connection collar of the bent elongated pass-through of FIG. 7B;
FIG. 7D is a partially fragmentary isometric view of the inner connection collar of the bent elongated pass-through of FIG. 7B;
FIG. 8 is a cross-sectional view of a portion of the vacuum insulated refrigeration structure having a serpentine elongated pass-through according to one aspect of the present disclosure;
FIG. 9 is a partially exploded cross-sectional view of a pass-through according to one aspect of the present disclosure;
FIG. 10 is partially exploded cross-sectional view of a pass-through according to another aspect of the present disclosure; and
FIG. 11 is a partially exploded cross-sectional view of a pass-through according to yet another aspect of the present disclosure.

### DETAILED DESCRIPTION OF EMBODIMENTS

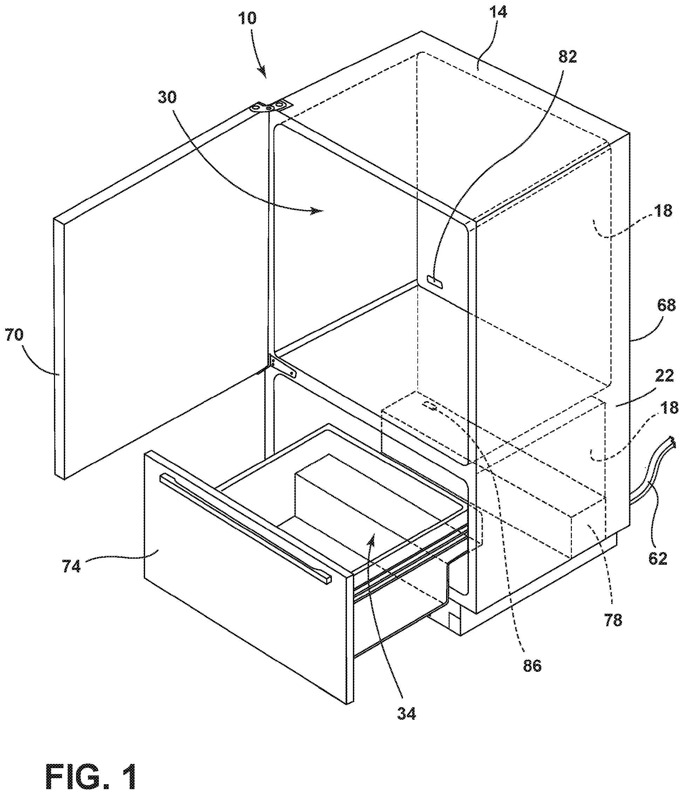

For purposes of description herein the terms "upper," "lower," "right," "left," "rear," "front," "vertical," "horizontal," and derivatives thereof shall relate to the device as oriented in FIG. 1. However, it is to be understood that the device may assume various alternative orientations and step sequences, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

As used herein, the term "and/or," when used in a list of two or more items, means that any one of the listed items can be employed by itself, or any combination of two or more of the listed items can be employed. For example, if a composition is described as containing components A, B, and/or C, the composition can contain A alone; B alone; C alone; A and B in combination; A and C in combination; B and C in combination; or A, B, and C in combination.

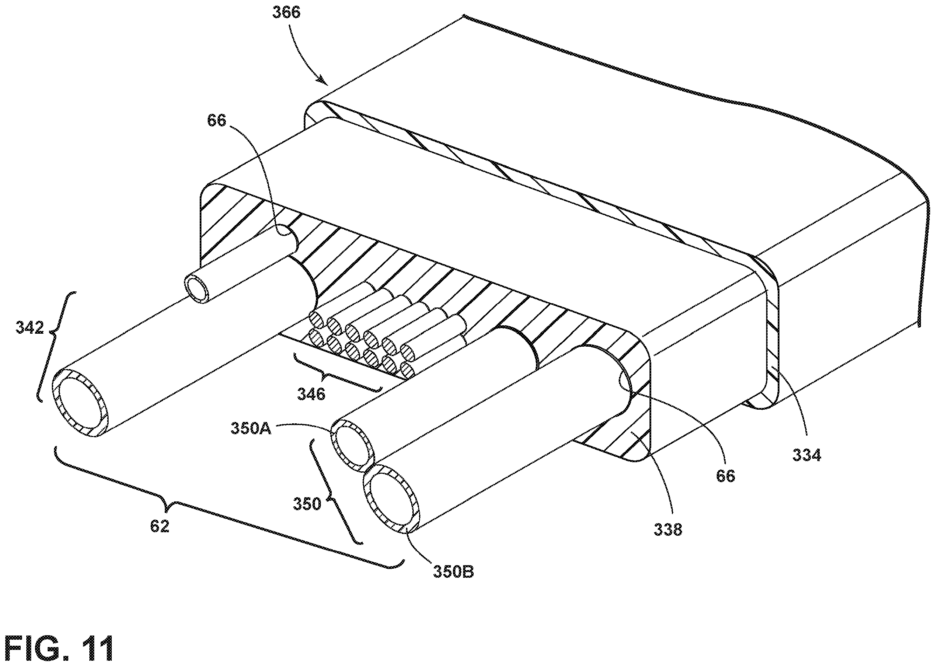

Referring to FIGS. 1-11, the reference numeral 10 generally designates a vacuum insulated refrigerator structure. The vacuum insulated refrigerator structure 10 includes a shell 14 having a liner 18 and a wrapper 22 where the shell 14 defines an internal vacuum cavity 26, a refrigerator compartment 30, and a freezer compartment 34. The vacuum insulated refrigerator structure 10 additionally includes an elongated pass-through 38 defining an elongated internal space 42 that has a central portion 46 disposed in the internal vacuum cavity 26. The elongated pass-through 38 has opposite end portions 50 that are sealingly connected to the shell 14, each opposite end portion 50a, 50b having an opening 54 that permits access to the elongated internal space 42 from the outside of the shell 14. The vacuum insulated refrigerator structure 10 also includes a vacuum core material fill 58 positioned in the internal vacuum cavity 26 and one or more utility lines 62 disposed in one or more elongated internal passageways 66 extending out of the openings 54 at the opposite end portions 50a, 50b of the elongated pass-through 38. The refrigerator compartment 30 and the freezer compartment 34 both have the elongated pass-through 38.

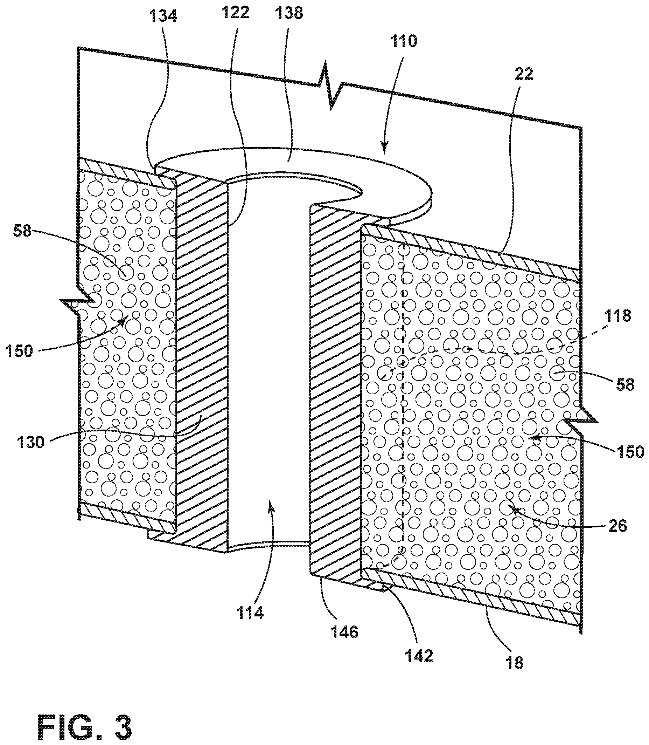

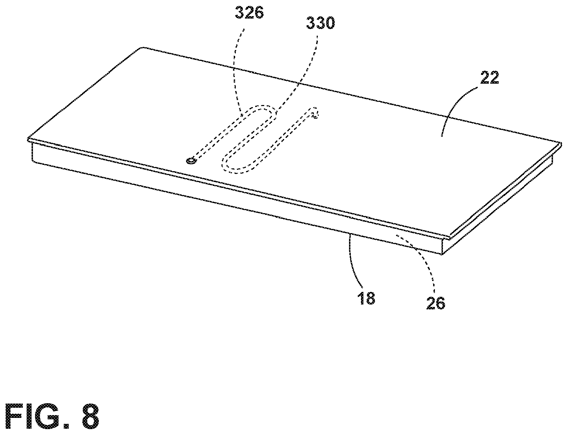

According to the invention, the elongated pass-through 38 has a straightened version as demonstrated in FIGS. 3-6, and a serpentine version as demonstrated in FIG. 8. In some embodiments, the elongated pass-through 38 is a straight and a serpentine metal elongated pass-through welded to the liner 18 and the wrapper 22. In other embodiments, the elongated pass-through 38 is a straight and a serpentine plastic elongated pass-through coupled to the liner 18 and the wrapper 22 using an adhesive. The resulting elongated pass-throughs 38, whether metal or plastic, provide improved structural strength and thermal capabilities in terms of desired insulation and reduced condensation in the elongated pass-throughs 38.

**0027]** Referring now to FIG. 1, the vacuum insulated refrigerator structure 10 according to one aspect of the present disclosure includes the shell 14 that includes the liner 18 and the wrapper 22 where the shell 14 additionally defines the refrigerator compartment 30 and the freezer compartment 34. The refrigerator compartment 30 may be enclosed by a refrigerator door 70 that is pivotally connected to the vacuum insulated refrigerator structure 10 and the freezer compartment 34 may be enclosed or sealed with a freezer door 74 that may be pivotally coupled to the vacuum insulated refrigerator structure 10 or coupled to the vacuum insulated refrigerator structure 10 through a drawer. The one or more utility lines 62 may include at least one water line that is connected to an ice/water dispensing unit (not shown), and at least one electrical line that is connected to the ice/water dispensing unit.

**0028]** A refrigeration system 78 cools the refrigerator compartment 30 and the freezer compartment 34. The refrigeration system 78 may include a known system including a compressor, condenser, evaporator, and other related components (not shown). Alternatively, the vacuum insulated refrigerator structure 10 may include thermoelectric components (not shown) or other suitable arrangements depending on use. As discussed in more detail below, the one or more utility lines 62 is routed through the shell 14 through a refrigerator compartment pass-through 82 and a freezer compartment pass-through 86.

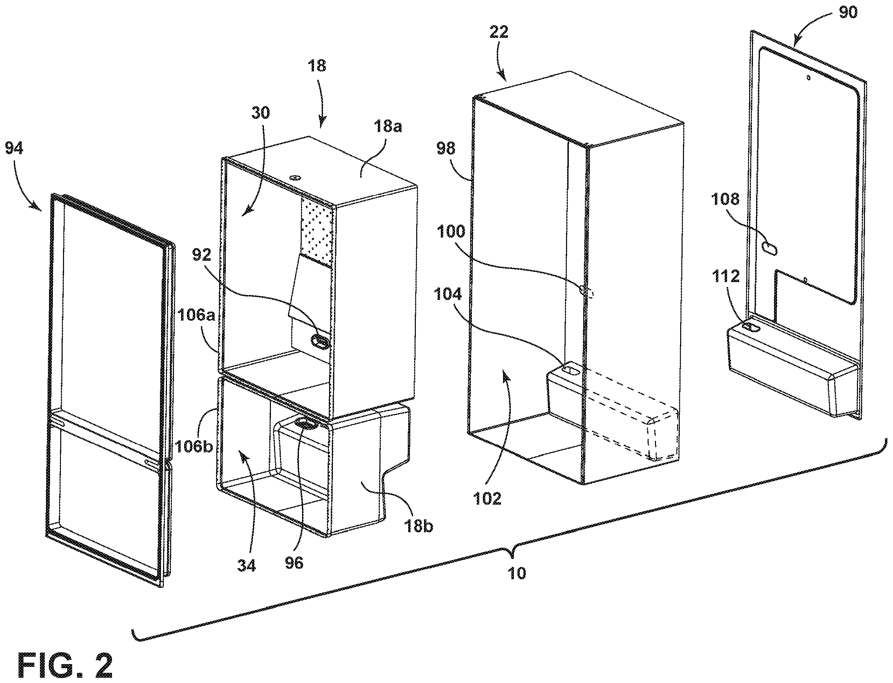

**0029]** Referring now to FIG. 2, the vacuum insulated refrigerator structure 10 may include a back wall 90 that is coupled to the wrapper 22. When assembled (FIG. 1), the liners 18, both a refrigerator liner 18a and a freezer liner 18b, are disposed in the wrapper 22 therein. The wrapper 22 and the liner 18 (or liners 18a and 18b) are coupled to an insulating thermal bridge 94. The wrapper 22 is coupled to the insulating thermal bridge 94 at a first edge 98. The first edge 98 extends around/surrounds a first opening 102 of the wrapper 22. The liner 18 has a second edge 106 that is coupled to the insulating thermal bridge 94 where the refrigerator liner 18a and the freezer liner 18b include second edges 106a and 106b, respectively, surrounding the refrigerator compartment 30 and the freezer compartment 34.

**0030]** Still referring to FIG. 2, the refrigerator liner 18a has a refrigerator liner pass-through opening 92 and the freezer liner 18b has a freezer liner pass-through opening 96 while the wrapper 22 has both a refrigerator wrapper pass-through opening 100 and a freezer wrapper pass-through opening 104. The back wall 90 includes a refrigerator back wall pass-through opening 108 and a freezer back wall pass-through opening 112. Each of the refrigerator pass-through openings 92, 100, 108 and the freezer pass-through openings 96, 104, 112 may be respectively aligned or offset for straight elongated pass-throughs, bent elongated pass-throughs, or serpentine elongated pass-throughs.

**0031]** Still referring to FIG. 2, in some embodiments, the wrapper 22 may initially only have four perimeter side walls where the refrigerator wrapper pass-through opening 100 and the freezer wrapper pass-through opening 104 do not exist. In these embodiments, the back wall 90 may be welded to the four perimeter side walls to form the entire five sided wrapper 22 where the refrigerator pass-through openings 92, 108 and the freezer pass-through openings 96, 112 may be respectively aligned or offset for straight elongated pass-throughs, bent elongated pass-throughs, or serpentine elongated pass-throughs.

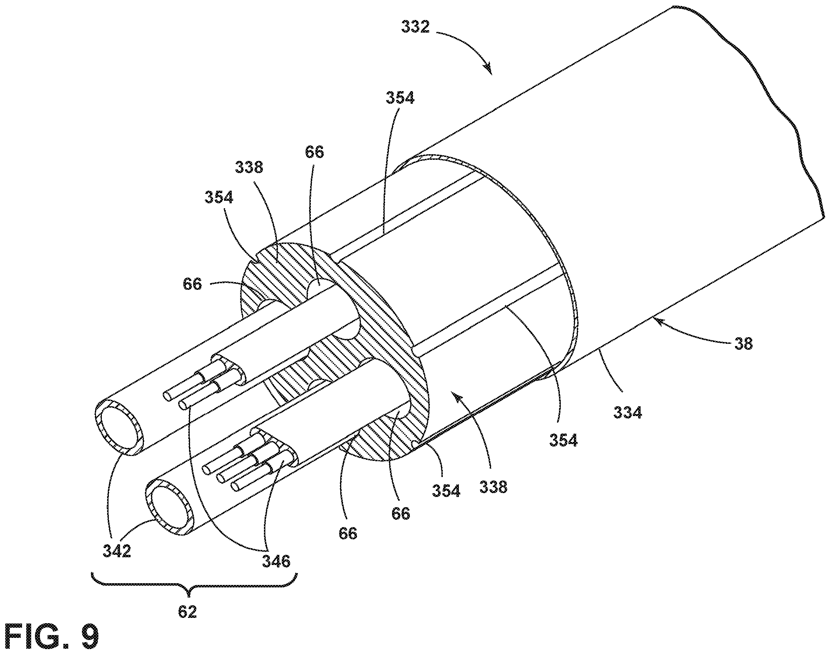

**0032]** Referring to FIGS. 1-2, the one or more utility lines 62, as defined herein, may include at least one or any combination of suction lines (not shown), refrigerant lines 342, electrical lines 346, and/or water lines 350 (FIGS. 9-11). The one or more utility lines 62 are routed through the shell 14 by positioning the one or more utility lines 62 in the elongated internal space 42 of the elongated pass-through 38 where the elongated pass-through 38 (FIG. 9) extends through the back wall 90, the wrapper 22, and the respective refrigerator liner 18a and freezer liner 18b, of the cabinet 68. In some embodiments, the elongated pass-through 38 may be made from an impermeable polymer material, a metal material, a composite, or a combination thereof. In other embodiments, the elongated pass-through 38 may be constructed from a multi-layer polymer material including a barrier layer that is substantially impervious to at least one gas.

**0033]** As also shown in FIG. 2, cabinet 68 (FIG. 1) includes the shell 14 made of the liner 18, wrapper 22, and the vacuum core material fill 58. The liner 18 and the wrapper 22 may be made of thermoformed polymer material or from sheet metal that is bent/formed. The wrapper 22 and the liner 18 may be constructed from a polymer or metal that is impervious to gasses to promote formation of a vacuum. Similarly, the refrigerator door 70 and/or the freezer door 74 may also include vacuum insulated structures also made with the wrapper 22 and the liner 18, and the vacuum core material fill 58. In some embodiments, the liner 18 and the wrapper 22 are interconnected around a perimeter of the vacuum insulated refrigerator structure 10 during assembly to form a substantially impervious structure. As discussed in more detail below, the vacuum core material fill 58 may be formed from a porous/permeable filler material such as a silica powder. In some embodiments, the vacuum core material fill 58 may optionally be disposed within an impermeable envelope (not shown). In some embodiments, the impermeable envelope is positioned within the shell 14 wherein the internal vacuum cavity 26 (FIG. 3) is located within the impermeable envelope. The impermeable envelope may be made of thermoformed or thermoset polymer materials impermeable to gasses or water. The vacuum core material fill 58 may be formed from various porous/permeable filler materials such as open cell foam, glass fibers, or other suitable materials. The construction of the wrappers 22 or the liners 18 in the refrigerator door 70 or the freezer door 74 may be substantially similar to known vacuum insulated refrigerator structures. In general, the shell's 14 internal vacuum cavity 26 of the refrigerator door 70, the freezer door 74, or the cabinet 68, makes up a sealed space which is filled with the vacuum core material fill 58 and a vacuum is then formed in the internal vacuum cavities 26 during the process of fabricating the cabinet 68 and the refrigerator door 70 and the freezer door 74. In some embodiments, the air pressure of the internal vacuum cavity 26 of the shell 14 can be less than 101,325 kPa, 50,6625 kPa, 10,1350 kPa, or 1,0135 kPa (1 atm., .5 atm., atm., or .01 atm).

**0034]** Referring now to FIG. 3, a straight elongated pass-through 110 defines an elongated internal space 114 having a central portion 118 and a first and second opposite end portion 122, 126. The straight elongated pass-through 110 is coupled to the wrapper 22 and the liner 18 where the central portion 118 is defined by a pass-through body 130. An outer flange 134 and an outer ring 138 are coupled to the wrapper 22. An inner flange 142 and an inner ring 146 are coupled to the liner 18. The straight elongated pass-through 110 is coupled to the liner 18 and the wrapper 22 form the internal vacuum cavity 26 where a vacuum 150 and the vacuum core material fill 58 can be applied.

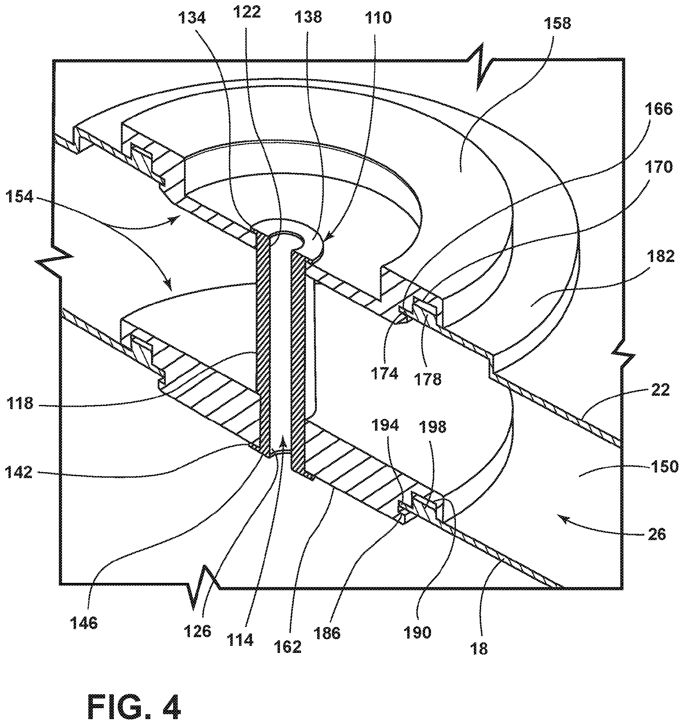

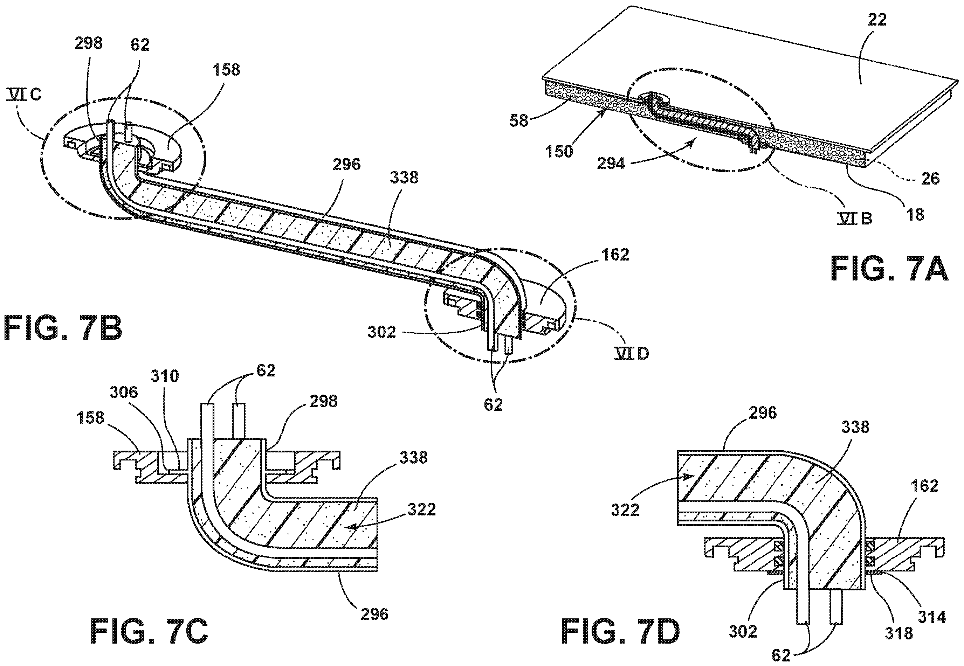

**0035]** With reference to FIG. 4, a connection collar 154 is shown having an outer connection collar 158 coupled to the wrapper 22 and an inner connection collar 162 (FIG. 7B) coupled to the liner 18. The outer connection collar 158 has a first outer collar receiving member 166 coupled to a first wrapper nub 174 and a second outer collar receiving member 170 coupled to a second wrapper nub 178. The first and second wrapper nubs 174, 178 may be coupled to a wrapper ledge 182. The inner connection collar 162 has a first inner collar receiving member 186 coupled to a first liner nub 194 and a second inner collar receiving member 190 coupled to a second liner nub 198. Once the outer connection collar 158 and the inner connection collar 162 are coupled to the wrapper 22 and the liner 18, respectively, the straight elongated pass-through 110 as previously described may be coupled. In some embodiments, the straight elongated pass-through 110 is a plastic or a metal elongated pass-through coupled to the liner 18 and the wrapper 22 using the connection collar 154 and an adhesive. The straight elongated pass-through 110 defines the elongated internal space 114 having the central portion 118 and the first and second opposite end portions 122, 126. The straight elongated pass-through 110 is coupled to the wrapper 22 and the liner 18 where the central portion 118 is defined by the pass-through body 130. The outer flange 134 and the outer ring 138 are coupled to the wrapper 22. The inner flange 142 and the inner ring 146 are coupled to the liner 18. The straight elongated pass-through 110 is coupled to the liner 18 and the wrapper 22 to form the internal vacuum cavity 26 where the vacuum 150 and the vacuum core material fill 58 can be applied.

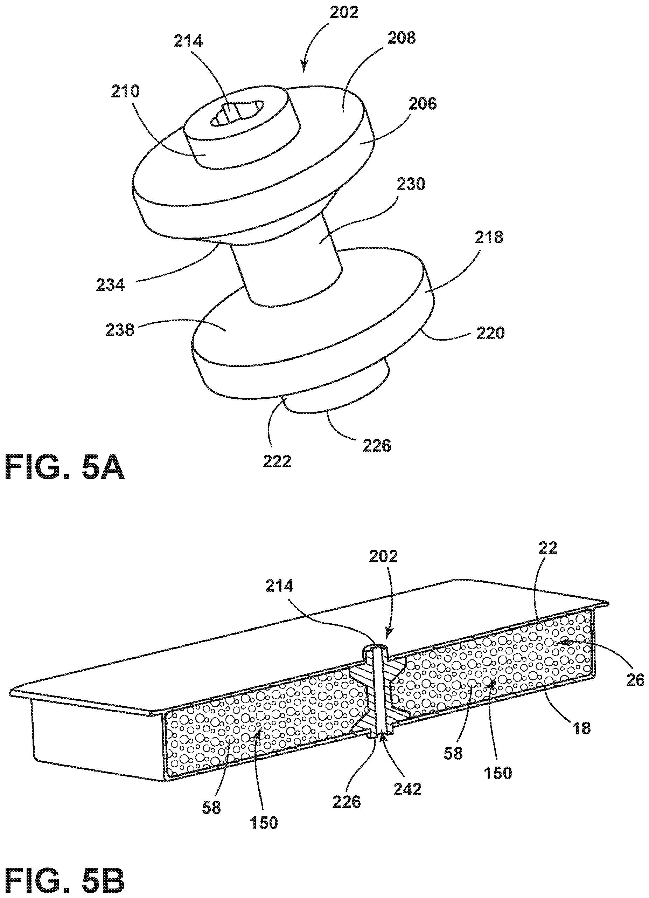

**0036]** Referring now to FIGS. 5A-5B, a straight elongated pass-through 202 has an outer thickened portion 206 where the outer thickened portion 206 has a wrapper contact edge 208, and an outer extension 210 with a first opposite end portion 214. The straight elongated pass-through 202 has an inner thickened portion 218 having a liner contact edge 220 and an inner extension 222 having a second opposite end portion 226. The straight elongated pass-through 202 has a central portion 230 that transitions to the outer thickened portion 206 and the inner thickened portion 218 through an outer beveled portion 234 and an inner beveled portion 238, respectively. The straight elongated pass-through 202 is coupled to the wrapper 22 with the wrapper contact edge 208 and the liner 18 through the liner contact edge 220. Once the straight elongated pass-through 202 is coupled, the vacuum 150 and the vacuum core material fill 58 may be applied to the internal vacuum cavity 26. An elongated internal space 242 leads from the refrigerator or freezer compartments 30, 34 to the exterior of the vacuum insulated refrigerator structure 10 (FIG. 1).

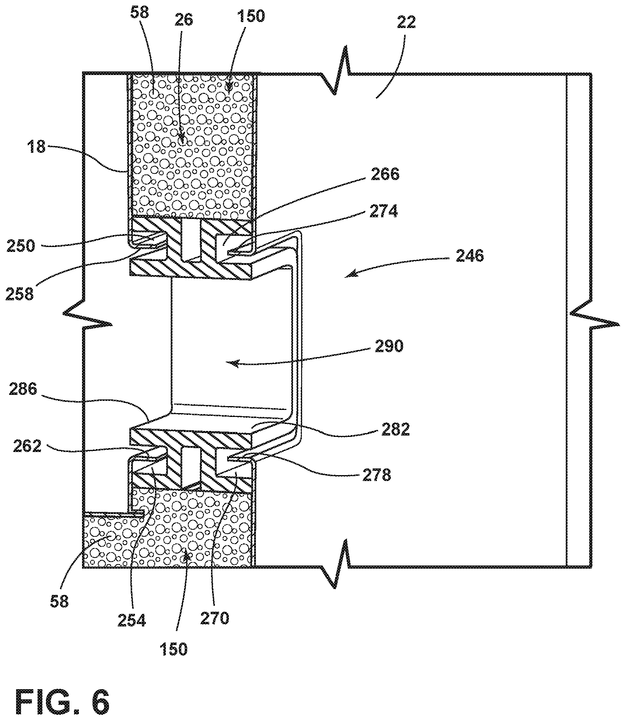

**0037]** Referring now to FIG. 6, a straight elongated pass-through 246 has a first liner channel 250 and a second liner channel 254 coupled to a first liner edge 258 and a second liner edge 262, respectively. The straight elongated pass-through 246 has a first wrapper channel 266 and a second wrapper channel 270 coupled to a first wrapper edge 274 and a second wrapper edge 278. The straight elongated pass-through 246 has a first opposite end portion 282 and a second opposite end portion 286 defining an elongated internal space 290. The first and second liner channels 250, 254 and the first and second wrapper channels 266, 270 each have an outer wall and an inner wall forming the respective channels where the liner and wrapper edges are positioned in an adhesive to form a seal that can maintain the internal vacuum cavity 26.

**0038]** Referring now to FIGS. 7A-7D, a bent elongated pass-through 294 is shown coupled to the liner 18 and the wrapper 22 having a central portion 296 in the internal vacuum cavity 26. The bent elongated pass-through 294 has a first opposite end portion 298 extending through the wrapper 22 and a second opposite end portion 302 extending through the liner 18. The first opposite end portion 298 has an outer flange 306 and an outer ring 310 coupled to the outer connection collar 158. The second opposite end portion 302 has an inner flange 314 and an inner ring 318 coupled to the inner connection collar 162. The bent elongated pass-through 294 defines an elongated internal space 322 having one or more utility lines 62.

**0039]** Referring now to FIG. 8, a serpentine elongated pass-through 326 is shown coupled to the liner 18 and the wrapper 22 with a central portion 330 positioned in the internal vacuum cavity 26. In some embodiments, the serpentine elongated pass-through 326 may be metal and can be welded to the liner 18 and the wrapper 22. In other embodiments, the serpentine elongated pass-through 326 may be plastic and can be coupled to the liner 18 and the wrapper 22 using the connection collar 154 (FIG. 4) and/or an adhesive. The serpentine elongated pass-through 326 may lower the risk of heat loss and condensation due to the longer length of the pass-through extending through the internal vacuum cavity 26 providing a lower temperature gradient between the outside environment and the freezer compartment 34. The serpentine elongated pass-through 326 may have a substantially rectangular, substantially square, substantially oval, or substantially circular cross sectional shape.

**0040]** According to the invention, the freezer compartment 34 has the serpentine elongated pass-through 326 and the refrigerator compartment 30 has the straight elongated pass-through 110. The bent elongated pass-through 294 may be used in combination with the refrigerator compartment 30 and the freezer compartment 34 with either the straight elongated pass-through 110 or the serpentine elongated pass-through 326.

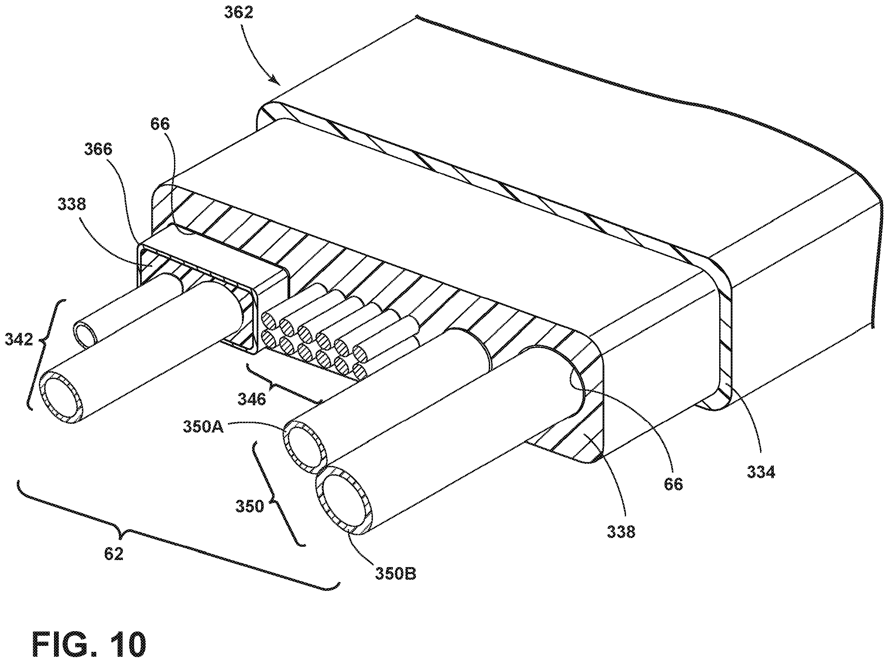

**0041]** Referring now to FIG. 9, the elongated pass-through 38 includes an outer casing 334 and an inner space material 338 that is disposed around the one or more utility lines 62 within the outer casing 334. The inner space material 338 includes a plurality of elongated internal passageways 66 through which one or more utility lines 62 such as suction lines (not shown), refrigeration lines 342, electrical lines 346, and/or water lines 350 (service water 350a and drinking water 350b) (FIG. 10) may be routed. In some embodiments, the inner space material 338 may be formed from an insulating material to prevent or reduce heat transfer to or from the outside ambient environment from the refrigeration and/or freezer compartments 30, 34. The inner space material 338 may be made from an insulation material such as polystyrene (PS), expanded polystyrene (EPS), and/or polyurethane (PU) foam. In some embodiments, the outer casing 334 may be formed from a metal or a plastic conduit. The outer casing 334 must be made to be relatively impermeable to air to thereby ensure that the vacuum 150 is maintained within the shell's 14 internal vacuum cavity 26. Thus, if the outer casing 334 is formed from a polymer material, the outer casing 334 may include one or more layers of polymer that are impermeable to gases. In some embodiments, one or more grooves 354 may be formed in an outer surface 358 of the inner space material 338 to help with placement and the expansion/contraction of the inner space material 338. The elongated pass-through 38 may have a generally circular cross-sectional shape in some embodiments or a substantially rectangular, substantially square, or substantially oval cross-sectional shape as needed by the required application.

**0042]** Referring now to FIGS. 10-11, a substantially rectangular elongated pass-through 362 is provided. The substantially rectangular elongated pass-through 362 includes the outer casing 334 and the inner space material 338 that is disposed around the one or more utility lines 62. The inner space material 338 includes the plurality of elongated internal passageways 66 through which one or more utility lines 62 such as suction lines (not shown), refrigerant lines 342, electrical lines 346, and/or water lines 350 (service water 350a, drinking water 350b) may be routed. In FIG. 10, an additional refrigerant line wrapper 366 is positioned around the refrigerant lines 342 to provide additional insulation.

**0043]** It will be understood by one having ordinary skill in the art that construction of the described device and other components is not limited to any specific material. Other exemplary embodiments of the device disclosed herein may be formed from a wide variety of materials, unless described otherwise herein.

**0044]** For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

**0045]** It is also important to note that the construction and arrangement of the elements of the device as shown in the exemplary embodiments is illustrative only. Although only a few embodiments of the present innovations have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements shown as multiple parts may be integrally formed, the operation of the interfaces may be reversed or otherwise varied, the length or width of the structures and/or members or connector or other elements of the system may be varied, the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations. Accordingly, all such modifications are intended to be included within the scope of the present innovations. Other substitutions, modifications, changes, and omissions may be made in the design, operating conditions, and arrangement of the desired and other exemplary embodiments.

**0046]** It will be understood that any described processes or steps within described processes may be combined with other disclosed processes or steps to form structures within the scope of the present device. The exemplary structures and processes disclosed herein are for illustrative purposes and are not to be construed as limiting.

**0047]** It is also to be understood that variations and modifications can be made on the aforementioned structures and methods without departing from the concepts of the present device, and further it is to be understood that such concepts are intended to be covered by the following claims unless these claims by their language expressly state otherwise.

**0048]** The above description is considered that of the illustrated embodiments only. Modifications of the device will occur to those skilled in the art and to those who make or use the device. Therefore, it is understood that the embodiments shown in the drawings and described above is merely for illustrative purposes and not intended to limit the scope of the device, which is defined by the following claims.

## Claims

1. A vacuum insulated refrigerator structure (10) comprising:
a shell (14) having a liner (18) and a wrapper (22) wherein the shell (14) defines an internal vacuum cavity (26), a refrigerator compartment (30), and a freezer compartment (34);
a serpentine elongated pass-through (326) and a straight elongated pass-through both defining an elongated internal passageway and having a central portion disposed in the internal vacuum cavity (26), and opposite end portions that are sealingly connected to the shell (14), each opposite end portion having an opening that permits access to the elongated internal passageway from the outside of the shell (14);
a vacuum core material fill (58) positioned in the internal cavity; and
one or more utility lines (62) disposed in the elongated internal passageway and having opposite ends extending out of the openings at the opposite ends of the elongated pass-through; wherein the freezer compartment (34) has the serpentine elongated pass-through (326) and the refrigerator compartment (30) has the straight elongated pass-through.

2. The vacuum insulated refrigerator structure (10) of claim 1, wherein the serpentine elongated pass-through (326) or the straight elongated pass-through is a metal elongated pass-through welded to the liner (18).

3. The vacuum insulated refrigerator structure (10) of claim 1, wherein the serpentine elongated pass-through (326) or the straight elongated pass-through is a plastic elongated pass-through coupled to the liner (18) and the wrapper (22) using an adhesive.

4. The vacuum insulated refrigerator structure (10) of claim 1-3, wherein the one or more utility lines (62) comprise a suction line, a refrigerant line, one or more electrical wires, a service water line, and/or a drinking water line.

5. The vacuum insulated refrigerator structure (10) of any of claims 1-4, wherein the one or more utility lines (62) are bundled together in a substantially rectangular configuration.

6. The vacuum insulated refrigerator structure (10) of claim 1, wherein the serpentine elongated pass-through (326) is a metal serpentine elongated pass-through (326) welded to the liner (18) and the wrapper (22).

7. The vacuum insulated refrigerator structure (10) of claim 1, wherein both the serpentine elongated pass-through (326) and the straight elongated pass-through are a plastic or a metal elongated pass-through coupled to the liner (18) and the wrapper (22) using a connection collar and an adhesive.

8. The vacuum insulated refrigerator structure (10) of any of claims 1-7, wherein the serpentine elongated pass-through (326) lowers a risk of heat loss and condensation.

9. The vacuum insulated refrigerator structure (10) of any of claims 1-8, wherein both the serpentine elongated pass-through (326) and the straight elongated pass-through have a substantially rectangular, substantially square, substantially oval, or substantially circular cross-sectional shape.

10. A method of routing utility lines (62) in a vacuum insulated refrigeration structure (10), the method comprising:
forming a shell (14) having a liner (18) and a wrapper (22) wherein the shell (14) forms an internal cavity, the shell (14) having at least first and second openings to the internal cavity;
forming a serpentine elongated pass-through (326) and a straight elongated pass-through each comprising an impervious material;
sealingly connecting a first end of each of the serpentine elongated pass-through (326) and the straight elongated pass-through to the shell (14) at the first opening;
sealingly connecting a second end of each of the serpentine elongated pass-through (326) and the straight elongated pass-through to the shell (14) at the second opening;
forming a vacuum in the internal cavity of the shell (14); and
routing one or more utility lines (62) through each of the elongated pass-throughs,
wherein the serpentine elongated pass-through (326) provides access to a freezer compartment (34) and the straight elongated pass-through provides access to a refrigerator compartment (30).

11. The method of claim 10, wherein one of the elongated pass-throughs is a metal elongated pass-through welded to the liner (18) and the wrapper (22).

12. The method of claim 10, wherein one of the elongated pass-throughs is a plastic elongated pass-through coupled to the liner (18) and the wrapper (22) using an adhesive.

13. The method of any of claims 10-12, wherein one of the elongated pass-throughs is a plastic or a metal elongated pass-through coupled to the liner (18) and the wrapper (22) using a connection collar and an adhesive.

14. The method of any of claims 10-13, wherein the one or more utility lines (62) comprise a suction line, a refrigerant line, one or more electrical wires, a service water line, and a drinking water line.

## Patentansprüche

1. Vakuumisolierte Kühlschrankstruktur (10), umfassend:
einen Mantel (14) mit einer Auskleidung (18) und einer Hülle (22), wobei der Mantel (14) einen inneren Vakuumhohlraum (26), ein Kühlschrankfach (30) und ein Gefrierschrankfach (34) definiert;
einen schlangenförmigen langgestreckten Durchgang (326) und einen geraden langgestreckten Durchgang, die beide einen langgestreckten inneren Durchgangsweg definieren und einen mittleren Abschnitt aufweisen, der in dem inneren Vakuumhohlraum (26) angeordnet ist, und gegenüberliegende Endabschnitte, die abdichtend mit dem Mantel (14) verbunden sind, wobei jeder gegenüberliegende Endabschnitt eine Öffnung aufweist, die einen Zugang zu dem langgestreckten inneren Durchgangsweg von der Außenseite des Mantels (14) ermöglicht;
eine Vakuumkernmaterialfüllung (58), die in dem inneren Hohlraum angeordnet ist; und
eine oder mehrere Versorgungsleitungen (62), die in dem langgestreckten inneren Durchgangsweg angeordnet sind und gegenüberliegende Enden aufweisen, die sich aus den Öffnungen an den gegenüberliegenden Enden des langgestreckten Durchgangswegs erstrecken;
wobei das Gefrierschrankfach (34) den schlangenförmigen langgestreckten Durchgang (326) aufweist und das Kühlschrankfach (30) den geraden langgestreckten Durchgang aufweist.

2. Vakuumisolierte Kühlschrankstruktur (10) nach Anspruch 1, wobei der schlangenförmige langgestreckte Durchgang (326) oder der gerade langgestreckte Durchgang ein langgestreckter Metalldurchgang ist, der an die Auskleidung (18) geschweißt ist.

3. Vakuumisolierte Kühlschrankstruktur (10) nach Anspruch 1, wobei der schlangenförmige langgestreckte Durchgang (326) oder der gerade langgestreckte Durchgang ein langgestreckter Kunststoffdurchgang ist, der unter Verwendung eines Klebstoffs mit der Auskleidung (18) und der Hülle (22) gekoppelt ist.

4. Vakuumisolierte Kühlschrankstruktur (10) nach Anspruch 1 bis 3, wobei die eine oder mehreren Versorgungsleitungen (62) eine Saugleitung, eine Kältemittelleitung, einen oder mehrere elektrische Drähte, eine Brauchwasserleitung und/oder eine Trinkwasserleitung umfassen.

5. Vakuumisolierte Kühlschrankstruktur (10) nach einem der Ansprüche 1 bis 4, wobei die eine oder mehreren Versorgungsleitungen (62) in einer im Wesentlichen rechteckigen Konfiguration zusammengebündelt sind.

6. Vakuumisolierte Kühlschrankstruktur (10) nach Anspruch 1, wobei der schlangenförmige langgestreckte Durchgang (326) ein schlangenförmiger langgestreckter Metalldurchgang (326) ist, der an die Auskleidung (18) und die Hülle (22) geschweißt ist.

7. Vakuumisolierte Kühlschrankstruktur (10) nach Anspruch 1, wobei sowohl der schlangenförmige langgestreckte Durchgang (326) als auch der gerade langgestreckte Durchgang ein langgestreckter Kunststoff- oder Metalldurchgang sind, der mit der Auskleidung (18) und der Hülle (22) unter Verwendung einer Verbindungsmanschette und eines Klebstoffs verbunden ist.

8. Vakuumisolierte Kühlschrankstruktur (10) nach einem der Ansprüche 1 bis 7, wobei der schlangenförmige langgestreckte Durchgang (326) ein Risiko von Wärmeverlust und Kondensation verringert.

9. Vakuumisolierte Kühlschrankstruktur (10) nach einem der Ansprüche 1 bis 8, wobei sowohl der schlangenförmige langgestreckte Durchgang (326) als auch der gerade langgestreckte Durchgang eine im Wesentlichen rechteckige, im Wesentlichen quadratische, im Wesentlichen ovale oder im Wesentlichen kreisförmige Querschnittsform aufweisen.

10. Verfahren zum Verlegen von Versorgungsleitungen (62) in einer vakuumisolierten Kühlstruktur (10), wobei das Verfahren umfasst:
Bilden eines Mantels (14) mit einer Auskleidung (18) und einer Hülle (22), wobei der Mantel (14) einen inneren Hohlraum bildet, wobei der Mantel (14) mindestens erste und zweite Öffnungen zu dem inneren Hohlraum aufweist;
Bilden eines schlangenförmigen langgestreckten Durchgangs (326) und eines geraden langgestreckte Durchgangs, die jeweils ein undurchlässiges Material umfassen;
abdichtendes Verbinden eines ersten Endes von jedem des schlangenförmigen langgestreckten Durchgangs (326) und des geraden langgestrecktes Durchgangs mit dem Mantel (14) an der ersten Öffnung;
abdichtendes Verbinden eines zweiten Endes von jedem des schlangenförmigen langgestreckten Durchgangs (326) und des geraden langgestreckten Durchgangs mit dem Mantel (14) an der zweiten Öffnung;
Bilden eines Vakuums in dem inneren Hohlraum des Mantels (14); und
Verlegen einer oder mehrerer Versorgungsleitungen (62) durch jeden der langgestreckten Durchgänge,
wobei der schlangenförmige langgestreckte Durchgang (326) Zugang zu einem Gefrierschrankfach (34) bereitstellt und der gerade langgestreckte Durchgang Zugang zu einem Kühlschrankfach (30) bereitstellt.

11. Verfahren nach Anspruch 10, wobei einer der langgestreckten Durchgänge ein langgestreckter Metalldurchgang ist, der an die Auskleidung (18) und die Hülle (22) geschweißt ist.

12. Verfahren nach Anspruch 10, wobei einer der langgestreckten Durchgänge ein langgestreckter Kunststoffdurchgang ist, der unter Verwendung eines Klebstoffs mit der Auskleidung (18) und der Hülle (22) verbunden ist.

13. Verfahren nach einem der Ansprüche 10 bis 12, wobei einer der langgestreckten Durchgänge ein langgestreckter Kunststoff- oder Metalldurchgang ist, der unter Verwendung eines Verbindungskragens und eines Klebstoffs mit der Auskleidung (18) und der Hülle (22) gekoppelt ist.

14. Verfahren nach einem der Ansprüche 10 bis 13, wobei die eine oder die mehreren Versorgungsleitungen (62) eine Saugleitung, eine Kältemittelleitung, einen oder mehrere elektrische Drähte, eine Brauchwasserleitung und eine Trinkwasserleitung umfassen.

## Revendications

1. Structure (10) de réfrigérateur isolée sous vide comprenant :
une coque (14) présentant une doublure (18) et une enveloppe (22), dans laquelle la coque (14) définit une cavité interne sous vide (26), un compartiment réfrigérateur (30) et un compartiment congélateur (34) ;
un chemin allongé en serpentin (326) et un chemin allongé droit définissant tous deux un passage interne allongé et présentant une partie centrale disposée dans la cavité de vide interne (26), et des parties d'extrémité opposées qui sont reliées de manière étanche à la coque (14), chaque partie d'extrémité opposée présentant une ouverture qui permet l'accès au passage interne allongé depuis l'extérieur de la coque (14) ;
un remplissage de matériau de noyau sous vide (58) positionné dans la cavité interne ; et
une ou plusieurs lignes de service (62) disposées dans le passage interne allongé et présentant des extrémités opposées s'étendant hors des ouvertures aux extrémités opposées du chemin allongé ;
dans laquelle le compartiment congélateur (34) présente le chemin allongé en serpentin (326) et le compartiment réfrigérateur (30) présente le chemin allongé droit.

2. Structure (10) de réfrigérateur isolée sous vide selon la revendication 1, dans laquelle le chemin allongé en serpentin (326) ou le chemin allongé droit est un chemin allongé métallique soudé au revêtement (18).

3. Structure (10) de réfrigérateur isolée sous vide selon la revendication 1, dans laquelle le chemin allongé en serpentin (326) ou le chemin allongé droit est un passage allongé en plastique couplé au revêtement (18) et à l'enveloppe (22) en utilisant un adhésif.

4. Structure (10) de réfrigérateur isolée sous vide selon la revendication 1-3, dans laquelle la ou les lignes de service (62) comprennent une ligne d'aspiration, une ligne de réfrigérant, un ou plusieurs fils électriques, une ligne d'eau de service et/ou une ligne d'eau potable.

5. Structure (10) de réfrigérateur isolée sous vide selon l'une quelconque des revendications 1-4, dans laquelle la ou les lignes de service (62) sont regroupées en faisceau selon une configuration sensiblement rectangulaire.

6. Structure (10) de réfrigérateur isolée sous vide selon la revendication 1, dans laquelle le chemin allongé en serpentin (326) est un chemin allongé en serpentin (326) métallique soudé à la doublure (18) et à l'enveloppe (22).

7. Structure (10) de réfrigérateur isolée sous vide selon la revendication 1, dans laquelle le chemin allongé en serpentin (326) et le chemin allongé droit sont tous les deux un chemin allongé en plastique couplé au revêtement (18) et à l'enveloppe (22) en utilisant un collier de connexion et un adhésif.

8. Structure (10) de réfrigérateur isolée sous vide selon l'une quelconque des revendications 1-7, dans laquelle le chemin allongé en serpentin (326) réduit un risque de perte de chaleur et de condensation.

9. Structure (10) de réfrigérateur isolée sous vide selon l'une quelconque des revendications 1-8, dans laquelle le chemin allongé en serpentin (326) et le chemin allongé droit présentent tous deux une forme en section transversale sensiblement rectangulaire, sensiblement carrée, sensiblement ovale ou sensiblement circulaire.

10. Procédé d'acheminement de lignes de service public (62) dans une structure de réfrigération isolée sous vide (10), le procédé comprenant les étapes consistant à :
former une coque (14) présentant un revêtement (18) et une enveloppe (22), dans lequel la coque (14) forme une cavité interne, la coque (14) présentant au moins des première et seconde ouvertures vers la cavité interne ;
former un chemin allongé en serpentin (326) et un chemin allongé droit, chacun comprenant un matériau imperméable ;
connecter de manière étanche une première extrémité de chacun du chemin allongé en serpentin (326) et du passage allongé droit à la coque (14) au niveau de la première ouverture ;
connecter de manière étanche une seconde extrémité de chacun du chemin allongé en serpentin (326) et du passage allongé droit à la coque (14) au niveau de la seconde ouverture ;
former un vide dans la cavité interne de la coque (14) ; et
acheminer une ou plusieurs lignes de service (62) à travers chacun des chemins allongés,
dans lequel le chemin allongé en serpentin (326) fournit un accès à un compartiment congélateur (34) et le chemin allongé droit fournit un accès à un compartiment réfrigérateur (30).

11. Procédé selon la revendication 10, dans lequel un des chemins allongés est un chemin allongé métallique soudé au revêtement (18) et à l'enveloppe (22).

12. Procédé selon la revendication 10, dans lequel un des chemins allongés est un chemin allongé en plastique couplé au revêtement (18) et à l'enveloppe (22) en utilisant un adhésif.

13. Procédé selon l'une quelconque des revendications 10-12, dans lequel un des chemins allongés est un chemin allongé en plastique ou métallique couplé au revêtement (18) et à l'enveloppe (22) en utilisant un collier de connexion et un adhésif.

14. Procédé selon l'une quelconque des revendications 10-13, dans lequel la ou les lignes de service (62) comprennent une ligne d'aspiration, une ligne de réfrigérant, un ou plusieurs fils électriques, une ligne d'eau de service et une ligne d'eau potable.
